# EUROPÄISCHE PATENTSCHRIFT

(11) **EP 3 224 101 B1**
(45) Veröffentlichungstag und Bekanntmachung des Hinweises auf die Patenterteilung: **09.03.2022**
(21) Anmeldenummer: 15784659.3
(22) Anmeldetag: 22.10.2015
(51) Int. Cl.: B60W 30/18, B60W 50/00, B60H 1/00, B60W 10/04, B60W 10/22, B60W 10/30, B60R 16/037, F02N 11/08

(54) **VERFAHREN UND VORRICHTUNG ZUM BETREIBEN EINES FAHRZEUGS**
METHOD AND DEVICE FOR OPERATING A VEHICLE
PROCÉDÉ ET DISPOSITIF POUR FAIRE FONCTIONNER UN VÉHICULE

(30) Priorität: 26.11.2014 DE 102014224108
(43) Veröffentlichungstag der Anmeldung: 04.10.2017
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2015/074484
(87) Internationale Veröffentlichungsnummer: WO 2016/083036

(56) Entgegenhaltungen:
- EP-A1- 1 020 309
- DE-A1-102009 038 431
- DE-A1-102011 106 357
- DE-A1-102012 217 615
- US-A1- 2006 235 753
- US-B1- 7 702 451

## Beschreibung

Die Erfindung betrifft ein Verfahren und eine Vorrichtung zum Betreiben eines Fahrzeugs. Die Erfindung betrifft ferner ein System zum Betreiben eines Fahrzeugs, ein Fahrzeug sowie ein Computerprogramm.

### Stand der Technik

Die Offenlegungsschrift DE 10 2011 106 357 A1 zeigt ein Verfahren zum Betreiben eines Kraftfahrzeugs.

Die Offenlegungsschrift DE 10 2009 038 431 A1 zeigt ein Verfahren zum Betreiben eines Fahrzeugs.

Die Offenlegungsschrift DE 10 2012 217 615 A1 zeigt eine Anordnung zum Steuern eines Aktivierens und/oder Deaktivierens eines Systems eines Fahrzeugs.

Die Patentschrift US 7,702,451 B1 zeigt ein programmierbares Motorstartsystem eines Fahrzeugs.

Die Offenlegungsschrift US 2012/0232965 A1 beschreibt ein computerimplementiertes System zum unterstützten Parken eines Fahrzeugs. Hierbei ist vorgesehen, dass ein Fahrer eines Fahrzeugs an einem Übergabeort sein Fahrzeug einem Chauffeur übergibt, der dieses anschließend parkt. Es ist weiterhin gezeigt, dass der Fahrer des Fahrzeugs über eine mobile Anwendung, beispielsweise über ein Smartphone, sein Fahrzeug anfordern kann. Dabei stehen ihm verschiedene Optionen zur Verfügung, insbesondere wo und wann er sein Fahrzeug in Empfang nehmen will.

### Offenbarung der Erfindung

Die der Erfindung zugrunde liegende Aufgabe kann darin gesehen werden, ein verbessertes Verfahren zum Betreiben eines Fahrzeugs bereitzustellen.

Die der Erfindung zugrunde liegende Aufgabe kann auch darin gesehen werden, eine verbesserte Vorrichtung zum Betreiben eines Fahrzeugs bereitzustellen.

Die der Erfindung zugrunde liegende Aufgabe kann auch darin gesehen werden, ein verbessertes System zum Betreiben eines Fahrzeugs bereitzustellen.

Die der Erfindung zugrunde liegende Aufgabe kann des Weiteren darin gesehen werden, ein verbessertes Fahrzeug bereitzustellen.

Die der Erfindung zugrunde liegende Aufgabe kann auch darin gesehen werden, ein verbessertes Computerprogramm bereitzustellen.

Diese Aufgaben werden mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Betreiben eines Fahrzeugs bereitgestellt, wobei eine oder mehrere Fahrzeugkomponenten des Fahrzeugs in Abhängigkeit von einer vorgegebenen Abholzeit des Fahrzeugs an einer Abholposition eines Parkplatzes derart betrieben werden, dass das Fahrzeug an der Abholposition zu der vorgegebenen Abholzeit einen oder mehrere vorgegebene Zustände aufweist, wobei die vorgegebene Abholzeit vorgibt, wann das Fahrzeug an der Abholposition sein muss.

Nach noch einem Aspekt wird eine Vorrichtung zum Betreiben eines Fahrzeugs bereitgestellt, umfassend eine Steuerungseinrichtung zum Steuern einer oder mehrerer Fahrzeugkomponenten abhängig von einer vorgegebenen Abholzeit des Fahrzeugs an einer Abholposition eines Parkplatzes derart, dass das Fahrzeug an der Abholposition zu der vorgegebenen Abholzeit einen oder mehrere vorgegebene Zustände aufweist, wobei die vorgegebene Abholzeit vorgibt, wann das Fahrzeug an der Abholposition sein muss.

Nach einem weiteren Aspekt wird ein System zum Betreiben eines Fahrzeugs bereitgestellt, wobei das System ein oder mehrere Fahrzeugkomponenten und die erfindungsgemäße Vorrichtung umfasst.

Gemäß einem weiteren Aspekt wird ein Fahrzeug bereitgestellt, welches die erfindungsgemäße Vorrichtung oder das erfindungsgemäße System umfasst.

Nach einem anderen Aspekt wird ein Computerprogramm bereitgestellt, welches Programmcodes zur Durchführung des erfindungsgemäßen Verfahrens umfasst, wenn das Computerprogramm auf einem Computer ausgeführt wird.

Die Erfindung umfasst also insbesondere den Gedanken, Fahrzeugkomponenten eines Fahrzeugs derart zu steuern, dass dieses zu einer vorgegebenen Abholzeit einen oder mehrere vorgegebene oder definierte Zustände aufweist. Hierbei entspricht die Abholzeit einer Zeit, an welcher das Fahrzeug von einer Abholposition eines Parkplatzes abgeholt werden soll. Dadurch wird insbesondere der technische Vorteil bewirkt, dass das Fahrzeug zu der vorgegebenen Abholzeit bereits den einen oder die mehrere vorgegebene oder definierte Zustände aufweist, sodass eine Zeitersparnis bewirkt ist, insofern ein Fahrer des Fahrzeugs, wenn er sein Fahrzeug abholt, nicht mehr warten muss, dass das Fahrzeug diese vorgegebenen Zustände erst einnehmen muss. Denn dieses weist bereits die vorgegebenen Zustände auf. Der Fahrer muss also nicht mehr darauf warten. Abhängig von den Fahrzeugkomponenten kann das auch einen gesteigerten Komfort für den Fahrer oder andere Fahrzeuginsassen bedeuten.

Ein Parkplatz im Sinne der vorliegenden Erfindung kann auch als eine Parkfläche bezeichnet werden und dient als Abstellfläche für Fahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz kann nach einer Ausführungsform von einem Parkhaus umfasst sein. Insbesondere ist der Parkplatz von einer Garage umfasst.

Eine Abgabeposition im Sinne der vorliegenden Erfindung, ist eine Position, an welcher ein Fahrer des Fahrzeugs sein Fahrzeug für einen autonomen Parkvorgang abstellen kann und von dieser sein Fahrzeug zu einem späteren Zeitpunkt wieder abholen kann.

Nach einer Ausführungsform ist die Abholposition die Abgabeposition.

In einer anderen Ausführungsform ist die Abholposition verschieden von der Abgabeposition.

Eine Parkposition im Sinne der vorliegenden Erfindung ist eine Position, an welcher das Fahrzeug autonom parken soll.

In einer Ausführungsform ist vorgesehen, dass das Fahrzeug autonom von der Abgabeposition zu der Parkposition navigiert.

In einer weiteren Ausführungsform ist vorgesehen, dass das Fahrzeug autonom in die Parkposition einparkt.

In einer anderen Ausführungsform ist vorgesehen, dass das Fahrzeug autonom aus der Parkposition ausparkt.

Nach einer weiteren Ausführungsform ist vorgesehen, dass das Fahrzeug autonom von der Parkposition zu der Abgabeposition navigiert.

Autonom im Sinne der vorliegenden Erfindung bedeutet insbesondere, dass das Fahrzeug selbstständig, also ohne einen Eingriff eines Fahrers, navigiert. Das Fahrzeug fährt also selbstständig auf dem Parkplatz, ohne dass ein Fahrer hierfür das Fahrzeug steuern müsste. Das heißt also insbesondere, dass das Fahrzeug zum Beispiel eine Führungseinrichtung zum Führen des Fahrzeugs umfasst. Die Führungseinrichtung führt für die Navigation das Fahrzeug autonom. Ein Navigieren umfasst insbesondere ein Führen. Ein Führen umfasst insbesondere eine Quer- und/oder eine Längsführung des Fahrzeugs. Ein solch autonomes fahrendes Fahrzeug, das automatisch ein- und ausparken kann, wird beispielsweise als ein AVP-Fahrzeug bezeichnet. AVP steht für "automatic valet parking" und kann mit "automatischer Parkvorgang" übersetzt werden. Fahrzeuge, die diese AVP-Funktionalität nicht aufweisen, werden beispielsweise als normale Fahrzeuge bezeichnet.

Das Fahrzeug wird nach anderen Ausführungsformen ferngesteuert auf dem Parkplatz geführt. Das heißt, dass das Fahrzeug ferngesteuert von der Abgabeposition zu der Parkposition und/oder von der Parkposition zu der Abgabeposition oder Abholposition geführt wird.

Bei einem vollautomatisierten (autonomen) Valet Parking wird das Fahrzeug von seinem Fahrer auf einer Abgabestelle, zum Beispiel vor einem Parkhaus geparkt und von da fährt das Fahrzeug selber in eine Parkposition / Parkbucht und wieder zurück zur Abgabestelle oder zur Abholposition.

Nach einer Ausführungsform ist vorgesehen, dass die eine oder die mehreren Fahrzeugkomponenten eine Standheizung und/oder eine Klimaanlage umfassen, die in Abhängigkeit von der vorgegebenen Abholzeit derart betrieben werden, dass das Fahrzeug als vorgegebenen Zustand eine vorgegebene Fahrzeuginnenraumtemperatur aufweist. Dadurch wird insbesondere der technische Vorteil bewirkt, dass ein Fahrer oder ein Fahrzeuginsasse zur Abholzeit ein Fahrzeug vorfindet, welches eine vorgegebene Fahrzeuginnenraumtemperatur hat. Dies bedeutet einen besonderen Komfort für den Fahrer oder den Fahrzeuginsassen. Vorzugsweise werden die Klimaanlage und/oder die Standheizung in einem Umluftmodus oder in einem Frischluftmodus betrieben. Im Umluftmodus ist eine Luftzufuhr von außen blockiert, so dass zum Beispiel keine Autoabgase in den Fahrzeuginnenraum gelangen können. Im Frischluftmodus ist eine Luftzufuhr von außen frei, Außenluft kann somit in den Fahrzeuginnenraum gelangen. Vorzugsweise ist vorgesehen, dass eine Luftqualität einer Fahrzeugumgebungsluft gemessen wird, wobei abhängig von der gemessenen Fahrzeugumgebungsluft entweder der Umluftmodus oder der Frischluftmodus gewählt wird. Das Messen wird zum Beispiel mittels eines Schadstoffsensors durchgeführt.

In einer anderen Ausführungsform ist vorgesehen, dass die eine oder die mehreren Fahrzeugkomponenten eine oder mehrere Fahrzeugsitzheizungen aufweisen, die in Abhängigkeit von der vorgegebenen Abholzeit derart betrieben werden, dass das Fahrzeug als vorgegebenen Zustand der einen oder den mehreren Fahrzeugsitzheizungen zugeordnete Fahrzeugsitze aufweist, die eine vorgegebene Fahrzeugsitztemperatur aufweisen. Dadurch wird insbesondere der technische Vorteil bewirkt, dass die Fahrzeugsitze eine vorgegebene Fahrzeugsitztemperatur zu der vorgegebenen Abholzeit aufweisen. Auch dies bedeutet einen erheblichen Komfort für Fahrzeuginsassen oder den Fahrer.

In einer anderen Ausführungsform ist vorgesehen, dass die eine oder die mehreren Fahrzeugkomponenten ein oder mehrere Fahrerassistenzsysteme umfassen, die in Abhängigkeit von der vorgegebenen Abholzeit derart betrieben werden, dass das Fahrzeug als vorgegebenen Zustand ein oder mehrere betriebsbereite Fahrerassistenzsysteme aufweist. Fahrerassistenzsysteme sind zum Beispiel: Verkehrszeichenerkennungssystem, Spurhalteassistent, Spurwarnungssystem, Adaptive Geschwindigkeitsregelung (ACC: Adaptive Cruise Control), ESP (Elektronisches Stabilitätsprogramm), ABS (Antiblockiersystem).

In einer anderen Ausführungsform ist vorgesehen, dass die eine oder die mehreren Fahrzeugkomponenten eine oder mehrere Scheibenheizungen aufweisen, die in Abhängigkeit von der vorgegebenen Abholzeit derart betrieben werden, dass das Fahrzeug als vorgegebenen Zustand der einen oder der mehreren Scheibenheizungen zugeordnete Scheiben aufweist, die zumindest teilweise enteist, vorzugsweise vollständig enteist, sind. Dadurch wird insbesondere der technische Vorteil bewirkt, dass die Scheiben zumindest teilweise oder vollständig zu der vorgegebenen Abholzeit enteist sind. Dadurch wird eine verbesserte Sicht für den Fahrer oder die Fahrzeuginsassen aus dem Fahrzeug heraus bewirkt. Dies kann in vorteilhafter Weise eine Verkehrssicherheit erhöhen.

Nach einer Ausführungsform ist vorgesehen, dass die eine oder die mehreren Fahrzeugkomponenten eine oder mehrere Sitzeinstellungseinrichtungen zum jeweiligen Einstellen eines Sitzes umfassen, die in Abhängigkeit von der vorgegebenen Abholzeit derart betrieben werden, dass das Fahrzeug als vorgegebenen Zustand Sitze aufweist, die in einer vorgegebenen Position eingestellt sind. Dadurch wird insbesondere der technische Vorteil bewirkt, dass der Fahrer oder die Fahrzeuginsassen zu der vorgegebenen Abholzeit Sitze vorfinden, die eine vorgegebene Position aufweisen. Diese müssen also nicht mehr eingestellt werden, wenn der Fahrer oder die Fahrzeuginsassen zum Fahrzeug kommen, um das Fahrzeug abzuholen. Die vorgegebene Position ist insbesondere abhängig von einer bestimmten Person. Das heißt also insbesondere, dass ein bestimmtes Personenprofil vorgegeben ist, basierend auf welchem der oder die Sitze eingestellt werden.

Nach einer Ausführungsform ist vorgesehen, dass die eine oder die mehreren Fahrzeugkomponenten eine Lenkradeinstelleinrichtung zum Einstellen eines Lenkrads umfassen, die in Abhängigkeit von der vorgegebenen Abholzeit derart betrieben wird, dass das Fahrzeug als vorgegebenen Zustand ein Lenkrad aufweist, welches in einer vorgegebenen Position eingestellt ist. Dadurch wird insbesondere der technische Vorteil bewirkt, dass das Fahrzeug zu der vorgegebenen Abholzeit ein Lenkrad aufweist, welches in einer vorgegebenen oder definierten Position eingestellt ist. Das Lenkrad muss also nicht mehr eingestellt werden, wenn der Fahrer in das Fahrzeug steigt. Das bedeutet in vorteilhafter Weise eine Zeitersparnis für den Fahrer. Auch hier kann nach einer Ausführungsform analog zu den Sitzeinstellungseinrichtungen vorgesehen sein, dass die vorgegebene Position des Lenkrads eine personenspezifische Position ist. Das heißt also insbesondere, dass das Lenkrad abhängig von einem Personenprofil eingestellt wird.

Gemäß einer weiteren Ausführungsform ist vorgesehen, dass die eine oder die mehreren Fahrzeugkomponenten eine oder mehrere Spiegeleinstelleinrichtungen zum jeweiligen Einstellen eines Spiegels umfassen, die in Abhängigkeit von der vorgegebenen Abholzeit derart betrieben werden, dass das Fahrzeug als vorgegebenen Zustand einen oder mehrere Spiegel aufweist, welche in einer vorgegebenen Position eingestellt sind. Dadurch wird insbesondere der technische Vorteil bewirkt, dass die Spiegel bereits eingestellt sind, wenn ein Fahrer oder Fahrzeuginsassen das Fahrzeug zu der vorgegebenen Abholzeit abholen wollen. Auch hier wird in vorteilhafter Weise eine Zeitersparnis bewirkt. Auch hier ist nach einer Ausführungsform vorgesehen, dass die Spiegelpositionen benutzerabhängig sind. Das heißt also, dass ein Benutzer- oder Personenprofil vorgegeben ist, welches eine Spiegel- oder mehrere Spiegelpositionen aufweist.

Gemäß einer weiteren Ausführungsform ist vorgesehen, dass die eine oder die mehreren Fahrzeugkomponenten ein Radio und/oder ein Navigationsgerät umfassen, die in Abhängigkeit von der vorgegebenen Abholzeit derart betrieben werden, dass diese vor der vorgegebenen Abholzeit eine aktuelle und/oder eine zukünftige Verkehrsinformation über ein Kommunikationsnetzwerk anfordern, um die aktuelle und/oder die zukünftige Verkehrsinformation über das Kommunikationsnetzwerk noch vor der vorgegebene Abholzeit herunterladen zu können (und dies insbesondere auch tun), so dass das Fahrzeug als vorgegebenen Zustand ein Radio und/oder ein Navigationsgerät aufweist, in denen eine aktuelle und/oder eine zukünftige Verkehrsinformation gespeichert ist.

Dadurch wird insbesondere der technische Vorteil bewirkt, dass eine aktuelle und/oder eine zukünftige Verkehrsinformation einem Fahrer oder Fahrzeuginsassen zu der vorgegebenen Abholzeit zur Verfügung stehen. Auch wird in vorteilhafter Weise eine Zeitersparnis bewirkt. In der Regel benötigt ein Radio oder benötigt ein Navigationsgerät eine gewisse Zeit, um eine aktuelle und/oder eine zukünftige Verkehrsinformation über das Kommunikationsnetzwerk anzufordern und dann herunterzuladen. Der Fahrer oder der Fahrzeuginsasse muss somit nicht mehr auf die Verkehrsinformationen warten, sondern kann unmittelbar basierend auf den Verkehrsinformationen Planungen hinsichtlich einer bestimmten Fahrtroute für das Fahrzeug durchführen.

Nach einer Ausführungsform umfasst das Kommunikationsnetzwerk ein WLAN-Netzwerk und/oder ein Mobilfunknetzwerk.

In einer weiteren Ausführungsform ist respektive wird die Kommunikation über das Kommunikationsnetzwerk verschlüsselt.

Gemäß einer weiteren Ausführungsform ist vorgesehen, dass die eine oder die mehreren Fahrzeugkomponenten eine Türantriebseinrichtung zum Öffnen und Schließen einer oder mehrerer Fahrzeugtüren aufweist, die in Abhängigkeit von der vorgegebenen Abholzeit derart betrieben wird, dass diese die eine oder die mehreren Fahrzeugtüren öffnet, so dass das Fahrzeug zu der vorgegebenen Abholzeit als vorgegebenen Zustand eine oder mehrere geöffnete Fahrzeugtüren aufweist. Dadurch wird insbesondere der technische Vorteil bewirkt, dass eine Zeitersparnis gegeben ist, insofern der Fahrer oder Fahrzeuginsassen nicht mehr die Fahrzeugtüren selbst öffnen müssen. Diese sind bereits geöffnet, wenn die vorgegebene Abholzeit erreicht ist. Auch dies bedeutet einen erheblichen Komfort für den Fahrer oder Fahrzeuginsassen.

Nach einer anderen Ausführungsform ist vorgesehen, dass die eine oder die mehreren Fahrzeugkomponenten ein Navigationsgerät umfassen, das in Abhängigkeit von der vorgegebenen Abholzeit derart betrieben wird, dass es vor der vorgegebenen Abholzeit eine Route zu einer gewünschten Zielposition ermittelt, so dass das Fahrzeug als vorgegebenen Zustand ein Navigationsgerät aufweist, welches für eine Navigation zu der gewünschten Zielposition bereit ist.

Dadurch wird insbesondere der technische Vorteil bewirkt, dass eine Zeitersparnis gegeben ist, insofern das Navigationsgerät nicht erst mit dem Ermitteln der Route beginnt, wenn ein Fahrer in das Fahrzeug steigt. Das Navigationsgerät ist insofern bereit für die Navigation zu der gewünschten Zielposition. In der Regel braucht es eine gewisse Zeit, bis ein Navigationsgerät eine Route zu einer gewünschten Zielposition ermittelt hat. Dieses Ermitteln erledigt das Navigationsgerät aber vor Ablauf der vorgegebenen Abholzeit.

Nach einer Ausführungsform ist vorgesehen, dass die Zielposition über ein Kommunikationsnetzwerk an das Navigationsgerät übermittelt wird.

Nach einer Ausführungsform ist vorgesehen, dass nach einer Detektion eines Einsteigens eines Fahrers des Fahrzeugs in das Fahrzeug das Navigationsgerät dem eingestiegenen Fahrer die ermittelte Route mittels einer Mensch-Maschinen-Schnittstelle bereitstellt. Dadurch wird insbesondere der technische Vorteil bewirkt, dass dem Fahrer unmittelbar und automatisch die ermittelte Route bereitgestellt wird. Der Fahrer hat also sofort und unmittelbar Kenntnis darüber, welche Route das Navigationsgerät zu der gewünschten Zielposition ermittelt hat. Er muss also selbst nicht mehr das Navigationsgerät bedienen, um sich die ermittelte Route bereitzustellen zu lassen.

Nach einer Ausführungsform umfasst die Mensch-Maschinen-Schnittstelle einen Bildschirm und/oder eine akustische und/oder eine haptische Ausgabeeinrichtung.

Gemäß einer weiteren Ausführungsform ist vorgesehen, dass die eine oder die mehreren Fahrzeugkomponenten einen Antriebsmotor des Fahrzeugs umfassen, der in Abhängigkeit von der vorgegebenen Abholzeit derart betrieben wird, dass das Fahrzeug als vorgegebenen Zustand einen gestarteten Antriebsmotor aufweist, so dass das Fahrzeug zur vorgegebenen Abholzeit losfahren kann.

Dadurch wird insbesondere der technische Vorteil bewirkt, dass eine Zeitersparnis gegeben ist, insofern der Fahrer sofort nach Einsteigen in das Fahrzeug mit dem Fahrzeug losfahren kann. Denn der Antriebsmotor ist bereits gestartet. Auch dies kann einen Komfort für den Fahrer oder Fahrzeuginsassen bewirken.

In einer Ausführungsform ist vorgesehen, dass ein vorbestimmter Antriebsmotordynamikmodus eingestellt wird, so dass das Fahrzeug als vorgegebenen Zustand einen Antriebsmotor mit einem vorbestimmten Antriebsmotordynamikmodus aufweist. Ein Antriebsmotordynamikmodus ist zum Beispiel: Sport, Normal, Eco.

In einer Ausführungsform ist vorgesehen, dass die eine oder die mehreren Fahrzeugkomponenten eine Fahrwegeinstellungseinrichtung des Fahrzeugs umfassen, die in Abhängigkeit von der vorgegebenen Abholzeit derart betrieben wird, dass das Fahrzeug als vorgegebenen Zustand eine vorbestimmten eingestellten Fahrweg aufweist, zum Beispiel hart, mittel oder weich.

In einer Ausführungsform ist vorgesehen, dass die eine oder die mehreren Fahrzeugkomponenten ein Elektronisches Stabilitätsprogramm (ESP) des Fahrzeugs umfassen, das in Abhängigkeit von der vorgegebenen Abholzeit derart betrieben wird, dass das Fahrzeug als vorgegebenen Zustand ein eingeschaltetes oder ein ausgeschaltetes Elektronisches Stabilitätsprogramm aufweist.

In einer Ausführungsform ist vorgesehen, dass die eine oder die mehreren Fahrzeugkomponenten einen Beifahrerairbag des Fahrzeugs umfassen, der in Abhängigkeit von der vorgegebenen Abholzeit derart betrieben wird, dass das Fahrzeug als vorgegebenen Zustand einen aktivierten oder einen deaktivierten Beifahrerairbag aufweist.

In einer anderen Ausführungsform ist vorgesehen, dass die vorgegebene Abholzeit basierend auf Positionsdaten eines mobilen Endgeräts eines Fahrzeugnutzers ermittelt und/oder überprüft wird, um basierend auf der Überprüfung eine neue Abholzeit als die vorgegebene Abholzeit zu ermitteln.

Das heißt also insbesondere, dass basierend auf den Positionsdaten eine Distanz zwischen dem Fahrzeug und dem mobilen Endgerät ermittelt werden kann. Basierend darauf kann beispielsweise eine Zeit ermittelt werden, die benötigt wird, damit der Fahrzeugnutzer zum Fahrzeug gelangt. Bei diesem Ermitteln wird insbesondere berücksichtigt, dass die unmittelbare kürzeste Distanz zwischen dem Fahrzeug und dem mobilen Endgerät nicht unbedingt derjenigen Distanz entsprechen muss oder derjenigen Wegstrecke entsprechen muss, die der Fahrzeugnutzer zurücklegen kann, um zu dem Fahrzeug zu gelangen. Beispielsweise muss ein Fahrzeugnutzer einen vorgegebenen Weg zu seinem Fahrzeug an der Abholposition nehmen, der nicht der Luftlinie oder der kürzesten Strecke zwischen Fahrzeug und aktueller Position entspricht.

Beim Überprüfen wird insbesondere überprüft, ob sich die ermittelte Abholzeit geändert hat. Wenn ja, wird eine neue Abholzeit ermittelt, die dann als vorgegebene Abholzeit verwendet wird. Somit können also auch in vorteilhafter Weise Verspätungen oder Verzögerungen mitberücksichtigt werden. Insbesondere kann berücksichtigt werden, wenn sich der Fahrzeugnutzer schneller als erwartet zu seinem Fahrzeug bewegt. Dadurch wird eine verbesserte Steuerung oder ein verbessertes Betreiben der einzelnen Fahrzeugkomponenten ermöglicht, sodass diese dann auch wirklich den vorgegebenen Zustand des Fahrzeugs bewirken, wenn der Fahrer oder ein Fahrzeuginsasse, also allgemein ein Fahrzeugnutzer, zu der Abholposition kommt.

Nach einer Ausführungsform ist vorgesehen, dass die Vorrichtung eingerichtet ist, das erfindungsgemäße Verfahren ein- oder durchzuführen.

Nach einer anderen Ausführungsform ist vorgesehen, dass das System eingerichtet ist, das erfindungsgemäße Verfahren aus- oder durchzuführen.

Nach einer anderen Ausführungsform ist vorgesehen, dass das Fahrzeug eingerichtet ist, das erfindungsgemäße Verfahren aus- oder durchzuführen.

Nach einer Ausführungsform ist vorgesehen, dass das Navigationsgerät die gewünschte Zielposition über das Kommunikationsnetzwerk empfängt und basierend auf der Zielposition eine Route zur Zielposition berechnet oder ermittelt. Das heißt, dass hier beispielsweise der Fahrer dem Navigationsgerät ein anzufahrendes Ziel mitteilt, so dass das Navigationsgerät die Route dorthin berechnet.

In einer Ausführungsform ist vorgesehen, dass das Navigationsgerät eine Route zu der Zielposition über das Kommunikationsnetzwerk empfängt. Dadurch wird insbesondere der technische Vorteil bewirkt, dass das Navigationsgerät selbst keine Routenberechnung mehr durchführen muss. Es kann für die Navigation die übermittelte Route verwenden. Das heißt, dass hier beispielsweise ein Endgerät, insbesondere ein mobiles Endgerät, des Fahrers die Route berechnen kann und nach der Berechnung über das Kommunikationsnetzwerk an das Navigationsgerät übermittelt.

Vorrichtungsmerkmale ergeben sich analog aus entsprechenden Verfahrensmerkmalen und umgekehrt.

Die Erfindung wird im Folgenden anhand von bevorzugten Ausführungsbeispielen näher erläutert. Hierbei zeigen:
- Fig. 1: ein Ablaufdiagramm eines Verfahrens zum Betreiben eines Fahrzeugs,
- Fig. 2: eine Vorrichtung zum Betreiben eines Fahrzeugs,
- Fig. 3: ein System zum Betreiben eines Fahrzeugs, und
- Fig. 4: ein Fahrzeug.

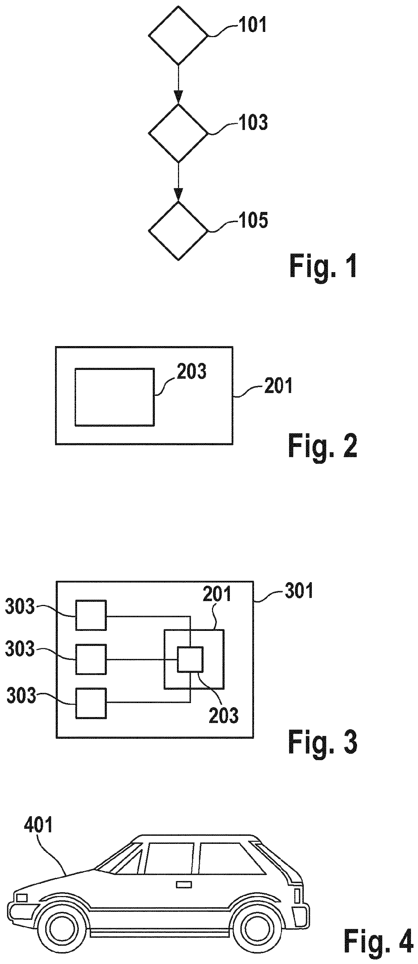

Fig. 1 zeigt ein Ablaufdiagramm eines Verfahrens zum Betreiben eines Fahrzeugs.

Das Fahrzeug steht auf einer Parkposition eines Parkplatzes. Das heißt also, dass das Fahrzeug auf dem Parkplatz in einer Parkposition parkt. In einem Schritt 101 wird über Kommunikationsnetzwerk an das Fahrzeug ein Startsignal zum Starten des Fahrzeugs, also insbesondere eines Antriebsmotors, gesendet.

Das Startsignal umfasst insbesondere die Information, wann das Fahrzeug an einer Abholposition des Parkplatzes abgeholt werden soll. Das heißt also, dass das Startsignal eine vorgegebene Abholzeit umfasst. Abhängig von der vorgegebenen Abholzeit fährt das Fahrzeug autonom zu der Abholposition derart, dass es rechtzeitig an der Abholposition zu der vorgegebenen Abholzeit ankommt. Hierbei können beispielsweise ein Verkehr auf dem Parkplatz, also insbesondere eine Fahrzeugdichte von weiteren Fahrzeugen auf dem Parkplatz, mitberücksichtigt werden. Insbesondere wird hierbei eine zurückzulegende Strecke von der Parkposition zu der Abholposition berücksichtigt. Es wird also berücksichtigt, wie lange das Fahrzeug von der Parkposition zu der Abholposition benötigt. Das Fahrzeug wird entsprechend rechtzeitig von der Parkposition zu der Abholposition losfahren, um pünktlich an der Abholposition zu der vorgegebenen Abholzeit anzukommen.

Basierend auf der vorgegebenen Abholzeit ist erfindungsgemäß gemäß einem Schritt 103 vorgesehen, dass ein oder mehrere Fahrzeugkomponenten des Fahrzeugs derart betrieben werden, dass das Fahrzeug an der Abholposition zu der vorgegebenen Abholzeit einen oder mehrere vorgegebene Zustände aufweist.

Das Fahrzeug fährt gemäß einem Schritt 105 von der Parkposition zu der Abholposition.

Abhängig von den Fahrzeugkomponenten und/oder abhängig von der vorgegebenen Abholzeit werden die Fahrzeugkomponenten bereits an der Parkposition in Betrieb genommen und/oder erst auf der Fahrt von der Parkposition zu der Abholposition und/oder erst nach Ankunft des Fahrzeugs an der Abholposition. So ist es beispielsweise sinnvoll, dass eine Klimaanlage und/oder eine Standheizung und/oder eine Fahrzeugsitzheizung bereits an der Parkposition angeschaltet werden, damit ausreichend Zeit zur Verfügung steht, um die vorgegebene Fahrzeuginnenraumtemperatur respektive vorgegebene Fahrzeugsitztemperatur zu erreichen. Denn in der Regel ist eine Standzeit des Fahrzeugs an der Abholposition zu kurz, als dass die vorgegebenen Temperaturen erreicht werden können, wenn erst an der Abholposition die Fahrzeugsitzheizungen und die Standheizung und die Klimaanlage angeschaltet werden.

So ist es in der Regel aber ausreichend, wenn erst nach Ankunft oder zumindest erst auf der Fahrt von der Parkposition zu der Abholposition die Einstelleinrichtungen ihre entsprechenden Elemente, also zum Beispiel das Lenkrad, Spiegel oder Sitze, einstellen. Denn dieses Einstellen benötigt in der Regel nur eine kurze Zeit, beispielsweise maximal eine Minute.

Fig. 2 zeigt eine Vorrichtung 201 zum Betreiben eines Fahrzeugs.

Die Vorrichtung 201 umfasst eine Steuerungseinrichtung zum Steuern einer oder mehrerer Fahrzeugkomponenten abhängig von einer vorgegebenen Abholzeit des Fahrzeugs an einer Abholposition eines Parkplatzes derart, dass das Fahrzeug an der Abholposition zu der vorgegebenen Abholzeit einen oder mehrere vorgegebene Zustände aufweist.

Nach einer Ausführungsform umfasst die Vorrichtung 201 eine Kommunikationsschnittstelle, die ausgebildet ist, über ein Kommunikationsnetzwerk ein Startsignal und/oder eine vorgegebene Abholzeit zu empfangen.

Nach einer Ausführungsform umfasst die Vorrichtung 201 einen Prozessor, der ausgebildet ist, basierend auf Positionsdaten eines Endgeräts, insbesondere eines mobilen Endgeräts, eines Fahrzeugnutzers eine vorgegebene Abholzeit zu ermitteln und/oder zu überprüfen, um basierend auf der Überprüfung eine neue Abholzeit als die vorgegebene Abholzeit zu ermitteln.

Nach einer Ausführungsform ist vorgesehen, dass die Kommunikationsschnittstelle ausgebildet ist, Positionsdaten eines Endgeräts, insbesondere eines mobilen Endgeräts, eines Fahrzeugnutzers zu empfangen.

Nach einer Ausführungsform ist das mobile Endgerät ein Mobilfunktelefon, zum Beispiel ein Smartphone.

Fig. 3 zeigt ein System 301 zum Betreiben eines Fahrzeugs.

Das System 301 umfasst mehrere Fahrzeugkomponenten 303 und die Vorrichtung 201 der Fig. 2. In einer nicht gezeigten Ausführungsform ist vorgesehen, dass nur eine Fahrzeugkomponente 303 vorgesehen ist.

Fig. 4 zeigt ein Fahrzeug 401.

Das Fahrzeug 401 umfasst beispielsweise die Vorrichtung 201 der Fig. 2 oder das System 301 der Fig. 3, die der Übersicht halber nicht in Fig. 4 eingezeichnet sind.

Die Erfindung stellt also zusammenfassend ein effizientes Konzept bereit, basierend auf welchem bestimmte Komfortaspekte einzeln oder in jeder möglichen Kombination einem Fahrer oder Fahrzeuginsassen eines Fahrzeugs zur Verfügung gestellt werden können. Dies insbesondere pünktlich zu der vorgegebenen Abholzeit, also wenn der Fahrer oder die Fahrzeuginsassen das Fahrzeug an der Abholposition abholen wollen. Solche Komfortaspekte sind beispielsweise die folgenden:
Ein Fahrzeuginnenraum ist auf eine vorbestimmte Temperatur vorgeheizt, zum Beispiel mittels einer Standheizung und/oder mittels einer Klimaanlage.

Ein oder mehrere Fahrzeugsitze sind beispielsweise mittels einer oder mehrerer Sitzheizungen auf eine vorbestimmte Temperatur vorgeheizt.

Ein oder mehrere Fahrzeugscheiben sind beispielsweise nicht beschlagen und/oder vereist, also zumindest insbesondere teilenteist oder zumindest teilweise nicht beschlagen. Dies wird insbesondere mittels einer oder mehrerer Scheibenheizungen bewirkt. Insbesondere wird dies mittels eines Luftstroms bewirkt, der beispielsweise mittels einer Standheizung und/oder einer Klimaanlage eingestellt werden kann, wobei dieser Luftstrom vorzugsweise auf die Scheiben gerichtet ist.

Beispielsweise sind Verkehrsnachrichten, also allgemein eine Verkehrsinformation, zum Beispiel eine aktuelle und/oder zukünftige Verkehrsinformation, auf dem neuesten, also aktuellen, Stand. Denn in der Regel muss bei bekannten Radios oder Navigationsgeräten eine Zeit lang gewartet werden, bis diese die aktuellen Informationen oder die künftigen Informationen heruntergeladen haben. Das heißt also, dass in der Regel bei heutigen Fahrzeugen das Radio und/oder das Navigationsgerät schon eine Zeit lang eingeschaltet sein muss.

Beispielsweise hat ein Navigationsgerät bereits eine gewünschte und/oder übermittelte Route berechnet. Beispielsweise informiert das Navigationsgerät den Fahrer über die Route, insbesondere informiert das Navigationsgerät den Fahrer über Behinderungen bei der Route.

Nach einer Ausführungsform ist vorgesehen, dass das Navigationsgerät die gewünschte Zielposition über das Kommunikationsnetzwerk empfängt und basierend auf der Zielposition eine Route zur Zielposition berechnet oder ermittelt. Das heißt, dass hier beispielsweise der Fahrer dem Navigationsgerät ein anzufahrendes Ziel mitteilt, so dass das Navigationsgerät die Route dorthin berechnet.

In einer Ausführungsform ist vorgesehen, dass das Navigationsgerät eine Route zu der Zielposition über das Kommunikationsnetzwerk empfängt. Dadurch wird insbesondere der technische Vorteil bewirkt, dass das Navigationsgerät selbst keine Routenberechnung mehr durchführen muss. Es kann für die Navigation die übermittelte Route verwenden. Das heißt, dass hier beispielsweise ein Endgerät, insbesondere ein mobiles Endgerät, des Fahrers die Route berechnen kann und nach der Berechnung über das Kommunikationsnetzwerk an das Navigationsgerät übermittelt.

Beispielsweise sind fahrer- oder fahrzeuginsassenspezifische Einstellungen (Sitz, Spiegel, Lenkrad) bereits für den Fahrer oder Fahrzeuginsassen eingestellt, also voreingestellt. Der Fahrer ist hierbei insbesondere die Person, die das Fahrzeug ab der Abholposition fahren wird. Hierbei ist beispielsweise eine Speichereinrichtung vorgesehen, die mehrere Einstellungs- oder Personenprofile gespeichert hat, die für mehrere Fahrer oder Fahrzeuginsassen entsprechende Einstellungen der Sitze, der Spiegel und des Lenkrads vorgeben.

Ein oder mehrere Fahrzeugtüren können sich vorzugsweise bei Wunsch automatisch öffnen, nachdem der Fahrer (inklusive weiterer Fahrer oder Fahrzeuginsassen) vor dem Fahrzeug steht, wenn das Fahrzeug in der Abholposition ist.

Ein Kofferraum öffnet sich bei Wunsch beispielsweise automatisch, nachdem der Fahrer (inklusive weiterer Fahrer oder Fahrzeuginsassen) vor dem Fahrzeug steht, wenn das Fahrzeug in der Abholposition steht.

Das Fahrzeug ist beispielsweise gestartet und zum sofortigen Abfahren bereit ab der Abholposition.

Nach einer Ausführungsform ist eine Fahrzeugtür eine Kofferraumtür.

Der erfindungsgemäße Gedanke basiert also insbesondere darauf, dass basierend auf der vorgegebenen Abholzeit, also wann das Fahrzeug an der Abholposition oder Abholstelle sein muss, bereits im Vorfeld beispielsweise das Fahrzeug gestartet wird, wobei folgende Aktionen für die gewünschten Komfortthemen oder Komfortaspekte einzeln oder in Kombination gestartet oder durchgeführt werden:
- Eine Standheizung und/oder eine Klimaanlage werden angeschaltet.
- Eine oder mehrere Sitzheizungen werden beispielsweise eingeschaltet oder angeschaltet.
- Eine oder mehrere Fensterheizungen werden beispielsweise ein- oder angeschaltet.
- Ein Radiogerät und/oder ein Navigationsgerät werden an- oder eingeschaltet, sodass diese in vorteilhafter Weise eine zukünftige und/oder aktuelle Verkehrsinformation über ein Kommunikationsnetzwerk herunterladen können respektive herunterladen.
- Beispielsweise programmiert sich das Navigationsgerät mit einer gewünschten übermittelten Route, insbesondere unter Berücksichtigung der Verkehrsbehinderungen vor, ist also bereit für eine Routenführung.
- Beispielsweise werden fahrer- oder fahrzeuginsassenspezifische Einstellungen am Sitz, Lenkrad, Spiegel für den gewünschten übermittelten Fahrer und gegebenenfalls auch für die Beifahrer oder weitere Fahrzeuginsassen eingestellt.
- An der Abholposition kann dann beispielsweise zusätzlich eine oder mehrere Aktionen betreffend dem Öffnen der Fahrzeugtüren, also beispielsweise des Kofferraums, eingeleitet oder durchgeführt werden.
- Beispielsweise wird die Öffnung nur dann durchgeführt, wenn wirklich der Fahrer am Fahrzeug ist, also bei positiver Identifikation oder Autorisation. Diese Autorisation kann beispielsweise durch eine Identifikation und einem Austausch mit einem mobilen Endgerät oder mobilen Gerät und/oder einem Schlüsselsystem des Fahrzeugs erfolgen.
- Nach einem Einsteigen des Fahrers ist beispielsweise vorgesehen, dass diesem die Route mit den gegebenenfalls vorhandenen Verkehrsbeeinträchtigungen sofort mitgeteilt wird, dies beispielsweise mittels einer Mensch-Maschinen-Schnittstelle.
- Des Weiteren ist beispielsweise vorgesehen, dass das Fahrzeug bereits an der Abholposition zu der vorgegebenen Abholzeit gestartet ist, damit ein Fahrer sofort starten oder losfahren kann.

## Patentansprüche

1. Verfahren zum Betreiben eines Fahrzeugs (401), wobei eine oder mehrere Fahrzeugkomponenten (303) des Fahrzeugs (401) in Abhängigkeit von einer vorgegebenen Abholzeit des Fahrzeugs (401) an einer Abholposition eines Parkplatzes derart betrieben (103) werden, dass das Fahrzeug (401) an der Abholposition zu der vorgegebenen Abholzeit einen oder mehrere vorgegebene Zustände aufweist, wobei die vorgegebene Abholzeit vorgibt, wann das Fahrzeug (401) an der Abholposition sein muss.

2. Verfahren nach Anspruch 1, wobei die eine oder die mehreren Fahrzeugkomponenten (303) eine Standheizung und/oder eine Klimaanlage umfassen, die in Abhängigkeit von der vorgegebenen Abholzeit derart betrieben werden, dass das Fahrzeug (401) als vorgegebenen Zustand eine vorgegebene Fahrzeuginnenraumtemperatur aufweist.

3. Verfahren nach Anspruch 2, wobei die Klimaanlage und/oder die Standheizung in einem Umluftmodus oder in einem Frischluftmodus betrieben.

4. Verfahren nach Anspruch 3, wobei eine Luftqualität einer Fahrzeugumgebungsluft gemessen wird, wobei abhängig von der gemessenen Fahrzeugumgebungsluft entweder der Umluftmodus oder der Frischluftmodus gewählt wird.

5. Verfahren nach einem der vorherigen Ansprüche, wobei die eine oder die mehreren Fahrzeugkomponenten ein oder mehrere Fahrerassistenzsysteme umfassen, die in Abhängigkeit von der vorgegebenen Abholzeit derart betrieben werden, dass das Fahrzeug als vorgegebenen Zustand ein oder mehrere betriebsbereite Fahrerassistenzsysteme aufweist.

6. Verfahren nach einem der vorherigen Ansprüche, wobei die eine oder die mehreren Fahrzeugkomponenten (303) eine oder mehrere Fahrzeugsitzheizungen aufweisen, die in Abhängigkeit von der vorgegebenen Abholzeit derart betrieben werden, dass das Fahrzeug (401) als vorgegebenen Zustand der einen oder den mehreren Fahrzeugsitzheizungen zugeordnete Fahrzeugsitze aufweist, die eine vorgegebene Fahrzeugsitztemperatur aufweisen.

7. Verfahren nach einem der vorherigen Ansprüche, wobei die eine oder die mehreren Fahrzeugkomponenten (303) eine oder mehrere Scheibenheizungen aufweisen, die in Abhängigkeit von der vorgegebenen Abholzeit derart betrieben werden, dass das Fahrzeug (401) als vorgegebenen Zustand der einen oder der mehreren Scheibenheizungen zugeordnete Scheiben aufweist, die zumindest teilweise enteist, vorzugsweise vollständig enteist, sind.

8. Verfahren nach einem der vorherigen Ansprüche, wobei die eine oder die mehreren Fahrzeugkomponenten (303) eine oder mehrere Sitzeinstellungseinrichtungen zum jeweiligen Einstellen eines Sitzes umfassen, die in Abhängigkeit von der vorgegebenen Abholzeit derart betrieben werden, dass das Fahrzeug (401) als vorgegebenen Zustand Sitze aufweist, die in einer vorgegebenen Position eingestellt sind.

9. Verfahren nach einem der vorherigen Ansprüche, wobei die eine oder die mehreren Fahrzeugkomponenten (303) eine Lenkradeinstelleinrichtung zum Einstellen eines Lenkrads umfassen, die in Abhängigkeit von der vorgegebenen Abholzeit derart betrieben wird, dass das Fahrzeug (401) als vorgegebenen Zustand ein Lenkrad aufweist, welches in einer vorgegebenen Position eingestellt ist.

10. Verfahren nach einem der vorherigen Ansprüche, wobei die eine oder die mehreren Fahrzeugkomponenten (303) eine oder mehrere Spiegeleinstelleinrichtungen zum jeweiligen Einstellen eines Spiegels umfassen, die in Abhängigkeit von der vorgegebenen Abholzeit derart betrieben werden, dass das Fahrzeug (401) als vorgegebenen Zustand einen oder mehrere Spiegel aufweist, welche in einer vorgegebenen Position eingestellt sind.

11. Verfahren nach einem der vorherigen Ansprüche, wobei die eine oder die mehreren Fahrzeugkomponenten (303) ein Radio und/oder ein Navigationsgerät umfassen, die in Abhängigkeit von der vorgegebenen Abholzeit derart betrieben werden, dass diese vor der vorgegebenen Abholzeit eine aktuelle und/oder eine zukünftige Verkehrsinformation über ein Kommunikationsnetzwerk anfordern, um die aktuelle und/oder die zukünftige Verkehrsinformation über das Kommunikationsnetzwerk noch vor der vorgegebene Abholzeit herunterladen zu können, so dass das Fahrzeug (401) als vorgegebenen Zustand ein Radio und/oder ein Navigationsgerät aufweist, in denen eine aktuelle und/oder eine zukünftige Verkehrsinformation gespeichert ist.

12. Verfahren nach einem der vorherigen Ansprüche, wobei die eine oder die mehreren Fahrzeugkomponenten (303) eine Türantriebseinrichtung zum Öffnen und Schließen einer oder mehrerer Fahrzeugtüren aufweist, die in Abhängigkeit von der vorgegebenen Abholzeit derart betrieben wird, dass diese die eine oder die mehreren Fahrzeugtüren öffnet, so dass das Fahrzeug (401) zu der vorgegebenen Abholzeit als vorgegebenen Zustand eine oder mehrere geöffnete Fahrzeugtüren aufweist.

13. Verfahren nach einem der vorherigen Ansprüche, wobei die eine oder die mehreren Fahrzeugkomponenten (303) ein Navigationsgerät umfassen, das in Abhängigkeit von der vorgegebenen Abholzeit derart betrieben wird, dass es vor der vorgegebenen Abholzeit eine Route zu einer gewünschten Zielposition ermittelt oder eine Route zu einer gewünschten Zielposition über ein Kommunikationsnetzwerk empfängt, so dass das Fahrzeug (401) als vorgegebenen Zustand ein Navigationsgerät aufweist, welches für eine Navigation zu der gewünschten Zielposition bereit ist.

14. Verfahren nach Anspruch 13, wobei nach einer Detektion eines Einsteigens eines Fahrers des Fahrzeugs (401) in das Fahrzeug (401) das Navigationsgerät dem eingestiegenen Fahrer die ermittelte Route mittels einer Mensch-Maschinen-Schnittstelle bereitstellt.

15. Verfahren nach Anspruch 13 oder 14, wobei das Navigationsgerät die gewünschte Zielposition über das Kommunikationsnetzwerk empfängt und basierend auf der Zielposition die Route zur Zielposition ermittelt.

16. Verfahren nach einem der vorherigen Ansprüche, wobei die eine oder die mehreren Fahrzeugkomponenten (303) einen Antriebsmotor des Fahrzeugs (401) umfassen, der in Abhängigkeit von der vorgegebenen Abholzeit derart betrieben wird, dass das Fahrzeug (401) als vorgegebenen Zustand einen gestarteten Antriebsmotor aufweist, so dass das Fahrzeug (401) zur vorgegebenen Abholzeit losfahren kann.

17. Verfahren nach Anspruch 16, wobei ein vorbestimmter Antriebsmotordynamikmodus eingestellt wird, so dass das Fahrzeug (401) als vorgegebenen Zustand einen Antriebsmotor mit einem vorbestimmten Antriebsmotordynamikmodus aufweist.

18. Verfahren nach einem der vorherigen Ansprüche, wobei die eine oder die mehreren Fahrzeugkomponenten eine Fahrwegeinstellungseinrichtung des Fahrzeugs umfassen, die in Abhängigkeit von der vorgegebenen Abholzeit derart betrieben wird, dass das Fahrzeug als vorgegebenen Zustand einen vorbestimmten eingestellten Fahrweg aufweist.

19. Verfahren nach einem der vorherigen Ansprüche, wobei die eine oder die mehreren Fahrzeugkomponenten ein Elektronisches Stabilitätsprogramm des Fahrzeugs umfassen, das in Abhängigkeit von der vorgegebenen Abholzeit derart betrieben wird, dass das Fahrzeug als vorgegebenen Zustand ein eingeschaltetes oder ein ausgeschaltetes Elektronisches Stabilitätsprogramm aufweist.

20. Verfahren nach einem der vorherigen Ansprüche, wobei die eine oder die mehreren Fahrzeugkomponenten einen Beifahrerairbag des Fahrzeugs umfassen, der in Abhängigkeit von der vorgegebenen Abholzeit derart betrieben wird, dass das Fahrzeug als vorgegebenen Zustand einen aktivierten oder einen deaktivierten Beifahrerairbag aufweist.

21. Verfahren nach einem der vorherigen Ansprüche, wobei die vorgegebene Abholzeit basierend auf Positionsdaten eines mobilen Endgeräts eines Fahrzeugnutzers ermittelt und/oder überprüft wird, um basierend auf der Überprüfung eine neue Abholzeit als die vorgegebene Abholzeit zu ermitteln.

22. Vorrichtung (201) zum Betreiben eines Fahrzeugs (401), umfassend eine Steuerungseinrichtung (203) zum Steuern einer oder mehrerer Fahrzeugkomponenten (303) abhängig von einer vorgegebenen Abholzeit des Fahrzeugs (401) an einer Abholposition eines Parkplatzes derart, dass das Fahrzeug an der Abholposition zu der vorgegebenen Abholzeit einen oder mehrere vorgegebene Zustände aufweist, wobei die vorgegebene Abholzeit vorgibt, wann das Fahrzeug (401) an der Abholposition sein muss.

23. System (301) zum Betreiben eines Fahrzeugs (401), umfassend eine oder mehrere Fahrzeugkomponenten (303) und die Vorrichtung (201) nach Anspruch 22.

24. Fahrzeug, umfassend die Vorrichtung (201) nach Anspruch 22 oder das System (301) nach Anspruch 23.

25. Computerprogramm, umfassend Programmcode zur Durchführung des Verfahrens nach einem der Ansprüche 1 bis 21, wenn das Computerprogramm auf einem Computer ausgeführt wird.

## Claims

1. Method for operating a vehicle (401), wherein one or more vehicle components (303) of the vehicle (401) are operated (103) in dependence on a prescribed collection time of the vehicle (401) at a collection position of a parking facility in such a way that the vehicle (401) at the collection position at the prescribed collection time has one or more prescribed states, wherein the prescribed collection time prescribes when the vehicle (401) must be at the collection position.

2. Method according to Claim 1, wherein the one or more vehicle components (303) comprise an independent car heater and/or an air-conditioning system which are operated in dependence on the prescribed collection time in such a way that the vehicle (401) has as the prescribed state a prescribed passenger-compartment temperature.

3. Method according to Claim 2, wherein the air-conditioning system and/or the independent car heater are operated in a recirculation mode or in a fresh-air mode.

4. Method according to Claim 3, wherein a quality of air surrounding the vehicle is measured and, dependent on the measured air surrounding the vehicle, either the recirculation mode or the fresh-air mode is chosen.

5. Method according to one of the preceding claims, wherein the one or more vehicle components comprise one or more driver assistance systems which are operated in dependence on the prescribed collection time in such a way that the vehicle has as the prescribed state one or more operationally ready driver assistance systems.

6. Method according to one of the preceding claims, wherein the one or more vehicle components (303) include one or more vehicle seat heaters which are operated in dependence on the prescribed collection time in such a way that the vehicle (401) has as the prescribed state vehicle seats assigned to the one or more vehicle seat heaters that have a prescribed vehicle seat temperature.

7. Method according to one of the preceding claims, wherein the one or more vehicle components (303) include one or more window heaters which are operated in dependence on the prescribed collection time in such a way that the vehicle (401) has as the prescribed state windows assigned to the one or more window heaters that are least partially defrosted, preferably completely defrosted.

8. Method according to one of the preceding claims, wherein the one or more vehicle components (303) comprise one or more seat setting devices for the respective setting of a seat which are operated in dependence on the prescribed collection time in such a way that the vehicle (401) has as the prescribed state seats that are set in a prescribed position.

9. Method according to one of the preceding claims, wherein the one or more vehicle components (303) comprise a steering wheel setting device for setting a steering wheel which is operated in dependence on the prescribed collection time in such a way that the vehicle (401) has as the prescribed state a steering wheel that is set in a prescribed position.

10. Method according to one of the preceding claims, wherein the one or more vehicle components (303) comprise one or more mirror setting devices for the respective setting of a mirror which are operated in dependence on the prescribed collection time in such a way that the vehicle (401) has as the prescribed state one or more mirrors that are set in a prescribed position.

11. Method according to one of the preceding claims, wherein the one or more vehicle components (303) comprise a radio and/or a navigation device which is/are set in dependence on the prescribed collection time in such a way that, before the prescribed collection time, it/they request(s) current and/or future traffic information by way of a communication network in order to be able to download the current and/or future traffic information by way of the communication network before the prescribed collection time, so that the vehicle (401) has as the prescribed state a radio and/or a navigation device in which current and/or future traffic information is stored.

12. Method according to one of the preceding claims, wherein the one or more vehicle components (303) include a door actuating device for opening and closing one or more vehicle doors which is operated in dependence on the prescribed collection time in such a way that it opens the one or more vehicle doors, so that the vehicle (401) at the prescribed collection time has as the prescribed state one or more opened vehicle doors.

13. Method according to one of the preceding claims, wherein the one or more vehicle components (303) comprise a navigation device which is operated in dependence on the prescribed collection time in such a way that, before the prescribed collection time, it determines a route to a desired destination position or receives a route to a desired destination position by way of a communication network, so that the vehicle (401) has as the prescribed state a navigation device that is ready for navigation to the desired destination position.

14. Method according to Claim 13, wherein, after detection of a driver of the vehicle (401) getting into the vehicle (401), the navigation device provides the driver that has got in with the determined route by means of a human-machine interface.

15. Method according to Claim 13 or 14, wherein the navigation device receives the desired destination position by way of the communication network and on the basis of the destination position determines the route to the destination position.

16. Method according to one of the preceding claims, wherein the one or more vehicle components (303) comprise a driving engine of the vehicle (401) which is operated in dependence on the prescribed collection time in such a way that the vehicle (401) has as the prescribed state a started driving engine, so that the vehicle (401) can drive away at the prescribed collection time.

17. Method according to Claim 16, wherein a predetermined driving engine dynamic mode is set, so that the vehicle (401) has as the prescribed state a driving engine with a predetermined driving engine dynamic mode.

18. Method according to one of the preceding claims, wherein the one or more vehicle components comprise a route setting device of the vehicle which is operated in dependence on the prescribed collection time in such a way that the vehicle has as the prescribed state a predetermined set route.

19. Method according to one of the preceding claims, wherein the one or more vehicle components comprise an electronic stability program of the vehicle which is operated in dependence on the predetermined collection time in such a way that the vehicle has as the prescribed state a switched-on or switched-off electronic stability program.

20. Method according to one of the preceding claims, wherein the one or more vehicle components comprise a passenger airbag of the vehicle which is operated in dependence on the prescribed collection time in such a way that the vehicle has as the prescribed state an activated or deactivated passenger airbag.

21. Method according to one of the preceding claims, wherein the prescribed collection time is determined and/or checked on the basis of position data of a mobile terminal of a vehicle user in order on the basis of the check to determine a new collection time as the prescribed collection time.

22. Device (201) for operating a vehicle (401), comprising a control device (203) for controlling one or more vehicle components (303) dependent on a prescribed collection time of the vehicle (401) at a collection position of a parking facility in such a way that the vehicle at the collection position at the prescribed collection time has one or more prescribed states, wherein the prescribed collection time prescribes when the vehicle (401) must be at the collection position.

23. System (301) for operating a vehicle (401), comprising one or more vehicle components (303) and the device (201) according to Claim 22.

24. Vehicle, comprising the device (201) according to Claim 22 or the system (301) according to Claim 23.

25. Computer program, comprising program code for carrying out the method according to one of Claims 1 to 21 when the computer program is run on a computer.

## Revendications

1. Procédé permettant de faire fonctionner un véhicule (401), dans lequel un ou plusieurs composants de véhicule (303) du véhicule (401) sont actionnés (103) en fonction d'une heure de ramassage spécifiée du véhicule (401) à une position de ramassage d'un parking de telle sorte que le véhicule (401) à la position de ramassage à l'heure de ramassage spécifiée présente un ou plusieurs états spécifiés, l'heure de ramassage spécifiée spécifiant quand le véhicule (401) doit se trouver à la position de ramassage.

2. Procédé selon la revendication 1, dans lequel ledit ou lesdits composants de véhicule (303) comprennent un chauffage d'appoint et/ou un système de climatisation qui sont actionnés en fonction de l'heure de ramassage spécifiée de telle sorte que le véhicule (401) présente une température d'habitacle de véhicule spécifiée.

3. Procédé selon la revendication 2, dans lequel le système de climatisation et/ou le chauffage d'appoint sont actionnés dans un mode à circulation d'air ou dans un mode d'air frais.

4. Procédé selon la revendication 3, dans lequel une qualité de l'air d'un air ambiant de véhicule est mesurée, le mode à circulation d'air ou le mode d'air frais étant sélectionné en fonction de l'air ambiant de véhicule mesuré.

5. Procédé selon l'une quelconque des revendications précédentes, dans lequel ledit ou lesdits composants de véhicule comprennent un ou plusieurs systèmes d'assistance au conducteur qui sont actionnés en fonction de l'heure de ramassage spécifiée de telle sorte que le véhicule présente comme état spécifié un ou plusieurs systèmes d'assistance au conducteur opérationnels.

6. Procédé selon l'une quelconque des revendications précédentes, dans lequel ledit ou lesdits composants de véhicule (303) présentent un ou plusieurs chauffages de siège de véhicule qui sont actionnés en fonction de l'heure de ramassage spécifiée de telle sorte que le véhicule (401) présente comme état spécifié des sièges de véhicule, associés audit ou auxdits chauffages de siège de véhicule, qui présentent une température de siège de véhicule spécifiée.

7. Procédé selon l'une quelconque des revendications précédentes, dans lequel ledit ou lesdits composants de véhicule (303) présentent un ou plusieurs chauffages de vitre qui sont actionnés en fonction de l'heure de ramassage spécifiée de telle sorte que le véhicule (401) présente comme état spécifié des vitres, associées audit ou auxdits chauffages de vitre, qui ont été dégivrées au moins partiellement, de préférence entièrement.

8. Procédé selon l'une quelconque des revendications précédentes, dans lequel ledit ou lesdits composants de véhicule (303) comprennent un ou plusieurs dispositifs de réglage de siège pour un réglage respectif d'un siège qui sont actionnés en fonction de l'heure de ramassage spécifiée de telle sorte que le véhicule (401) présente comme état spécifié des sièges qui sont réglés sur une position spécifiée.

9. Procédé selon l'une quelconque des revendications précédentes, dans lequel ledit ou lesdits composants de véhicule (303) comprennent un dispositif de réglage de volant pour régler un volant qui est actionné en fonction de l'heure de ramassage spécifiée de telle sorte que le véhicule (401) présente comme état spécifié un volant qui est réglé sur une position spécifiée.

10. Procédé selon l'une quelconque des revendications précédentes, dans lequel ledit ou lesdits composants de véhicule (303) comprennent un ou plusieurs dispositifs de réglage de miroir pour le réglage respectif d'un miroir, qui sont actionnés en fonction de l'heure de ramassage spécifiée de telle sorte que le véhicule (401) présente comme état spécifié un ou plusieurs miroirs qui sont réglés sur une position spécifiée.

11. Procédé selon l'une quelconque des revendications précédentes, dans lequel ledit ou lesdits composants de véhicule (303) comprennent une radio et/ou un appareil de navigation qui sont actionnés en fonction de l'heure de ramassage spécifiée de telle sorte qu'ils demandent avant l'heure de ramassage spécifiée une information de trafic actuelle et/ou future par l'intermédiaire d'un réseau de communication afin de pouvoir télécharger l'information de trafic actuelle et/ou future par l'intermédiaire du réseau de communication avant même l'heure de ramassage spécifiée de sorte que le véhicule (401) présente comme état spécifié une radio et/ou un appareil de navigation dans lesquels est mémorisée une information de trafic actuelle et/ou future.

12. Procédé selon l'une quelconque des revendications précédentes, dans lequel ledit ou lesdits composants de véhicule (303) présentent un dispositif d'entraînement de portière pour ouvrir et fermer une ou plusieurs portières de véhicule, qui est actionné en fonction de l'heure de ramassage spécifiée de telle sorte qu'il ouvre ladite une ou les plusieurs portières de véhicule de sorte que le véhicule (401) présente à l'heure de ramassage spécifiée comme état spécifié une ou plusieurs portières de véhicule ouvertes.

13. Procédé selon l'une quelconque des revendications précédentes, dans lequel ledit ou lesdits composants de véhicule (303) comprennent un appareil de navigation qui est actionné en fonction de l'heure de ramassage spécifiée de telle sorte qu'il détermine avant l'heure de ramassage spécifiée un itinéraire vers une position de destination souhaitée ou reçoit un itinéraire vers une position de destination souhaitée par l'intermédiaire d'un réseau de communication de sorte que le véhicule (401) présente comme état spécifié un appareil de navigation qui est prêt à naviguer jusqu'à la position de destination souhaitée.

14. Procédé selon la revendication 13, dans lequel, après que l'embarquement d'un conducteur du véhicule (401) dans le véhicule (401) a été détecté, l'appareil de navigation fournit l'itinéraire déterminé au conducteur embarqué au moyen d'une interface homme-machine.

15. Procédé selon la revendication 13 ou 14, dans lequel l'appareil de navigation reçoit la position de destination souhaitée par l'intermédiaire du réseau de communication et détermine l'itinéraire vers la position de destination sur la base de la position de destination.

16. Procédé selon l'une quelconque des revendications précédentes, dans lequel ledit ou lesdits composants de véhicule (303) comprennent un moteur d'entraînement du véhicule (401) qui est actionné en fonction de l'heure de ramassage spécifiée de telle sorte que le véhicule (401) présente comme état spécifié un moteur d'entraînement démarré de sorte que le véhicule (401) peut partir à l'heure de ramassage spécifiée.

17. Procédé selon la revendication 16, dans lequel un mode de dynamique de moteur d'entraînement prédéterminé est réglé de telle sorte que le véhicule (401) présente comme état spécifié un moteur d'entraînement ayant un mode de dynamique de moteur d'entraînement prédéterminé.

18. Procédé selon l'une quelconque des revendications précédentes, dans lequel ledit ou lesdits composants de véhicule comprennent un dispositif de réglage de trajet du véhicule qui est actionné en fonction de l'heure de ramassage spécifiée de telle sorte que le véhicule présente comme état spécifié un trajet réglé prédéterminé.

19. Procédé selon l'une quelconque des revendications précédentes, dans lequel ledit ou lesdits composants de véhicule comprennent un programme de stabilité électronique du véhicule qui est actionné en fonction de l'heure de ramassage spécifiée de telle sorte que le véhicule présente comme état spécifié un programme de stabilité électronique mis en marche ou arrêté.

20. Procédé selon l'une quelconque des revendications précédentes, dans lequel ledit ou lesdits composants de véhicule comprennent un airbag passager du véhicule qui est actionné en fonction de l'heure de ramassage spécifiée de telle sorte que le véhicule présente comme état spécifié un airbag passager activé ou désactivé.

21. Procédé selon l'une quelconque des revendications précédentes, dans lequel l'heure de ramassage spécifiée est déterminée et/ou vérifiée sur la base de données de position d'un terminal mobile d'un utilisateur de véhicule afin de déterminer une nouvelle heure de ramassage comme heure de ramassage spécifiée sur la base de la vérification.

22. Dispositif (201) permettant de faire fonctionner un véhicule (401), comprenant un dispositif de commande (203) pour commander un ou plusieurs composants de véhicule (303) en fonction d'une heure de ramassage spécifiée du véhicule (401) à une position de ramassage d'un parking de telle sorte que le véhicule à la position de ramassage à l'heure de ramassage spécifiée présente un ou plusieurs états spécifiés, l'heure de ramassage spécifiée spécifiant quand le véhicule (401) doit se trouver à la position de ramassage.

23. Système (301) permettant de faire fonctionner un véhicule (401), comprenant un ou plusieurs composants de véhicule (303) et le dispositif (201) selon la revendication 22.

24. Véhicule, comprenant le dispositif (201) selon la revendication 22 ou le système (301) selon la revendication 23.

25. Programme informatique, comprenant du code programme pour exécuter le procédé selon l'une quelconque des revendications 1 à 21 lorsque le programme informatique est exécuté sur un ordinateur.
